**Europäisches Patentamt**

(19) **European Patent Office**

**Office européen des brevets**

(11) Numéro de publication: **0 112 952**
**B1**

(12) **FASCICULE DE BREVET EUROPEEN**

(45) Date de publication du fascicule du brevet:
**11.03.87**

(51) Int. Cl.⁴: **H 04 L 11/16**

(21) Numéro de dépôt: **82430048.7**

(22) Date de dépôt: **28.12.82**

(54) Système de connexion de stations de travail du type multipoint.

(43) Date de publication de la demande:
**11.07.84 Bulletin 84/28**

(45) Mention de la délivrance du brevet:
**11.03.87 Bulletin 87/11**

(84) Etats contractants désignés:
**AT BE CH DE FR GB IT LI NL SE**

(56) Documents cités:
**FR - A - 2 117 999**
**US - A - 3 732 374**

**PATENTS ABSTRACTS OF JAPAN, vol. 2, no. 70, 26 mai 1978, page 2634 E 78**
**PATENTS ABSTRACTS OF JAPAN, vol. 3, no. 145 (E-155), 30 novembre 1979, page 53 E 155**

(73) Titulaire: **International Business Machines Corporation, Old Orchard Road, Armonk, N.Y. 10504 (US)**

(84) Etats contractants désignés: **BE CH DE GB IT LI NL SE AT**

(73) Titulaire: **Compagnie IBM FRANCE, 5 Place Vendôme, F-75000 Paris 1er (FR)**

(84) Etats contractants désignés: **FR**

(72) Inventeur: **Croisier, Alain, 1 avenue des Acacias, F-06800 Cagnes-sur-Mer (FR)**

(74) Mandataire: **de Pena, Alain, Compagnie IBM France Département de Propriété Intellectuelle, F-06610 La Gaude (FR)**

ACTORUM AG

## Description

### Domaine Technique

La présente invention concerne les systèmes de connexion de stations de travail du type multipoint, et plus particulièrement un système de connexion du type multipoint pouvant fonctionner en mode multiplex temporel.

### Etat de la Technique

Le concept de système de communications intra entreprise nécessite l'intégration des applications voix, texte, image et données dans une même station de travail et leur couplage à une unité centrale de commutation et de traitement de l'information. Etant donné que les coûts de couplage de l'unité centrale aux liaisons de communication représentent une large partie du coût du système, il est désirable que plusieurs stations de travail partagent une même liaison. Pour des applications vocales (téléphonie) chaque station nécessite un canal indépendant qui peut être obtenu de façon économique en utilisant la technique du multiplex temporel. Pour d'autres applications les stations peuvent partager un canal commun en utilisant un protocole d'accès particulier.

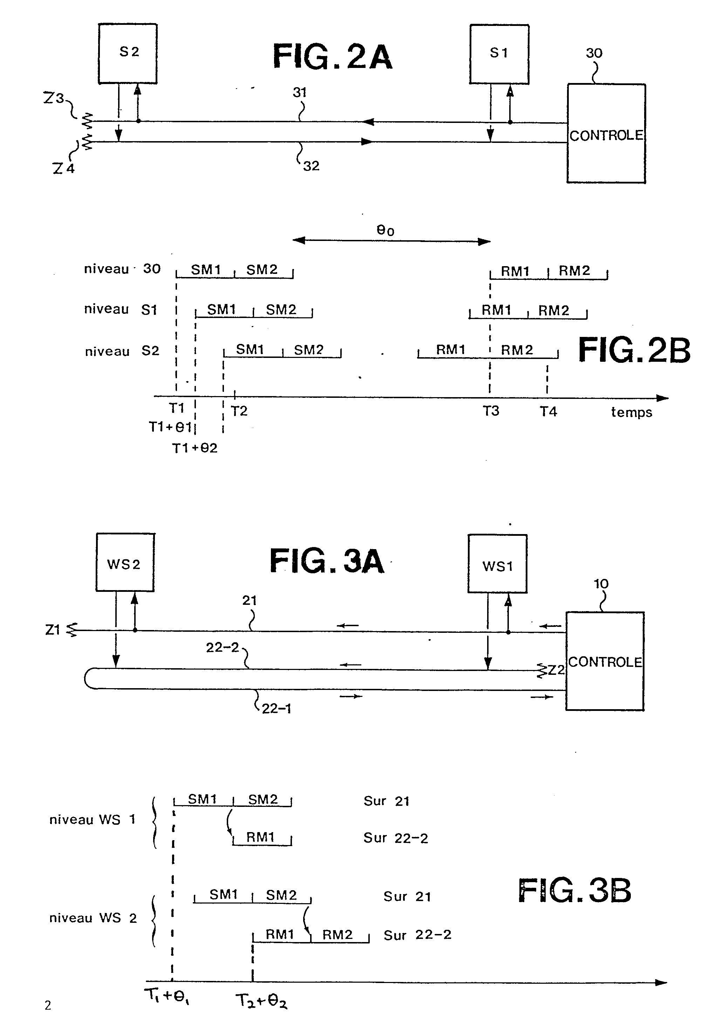

Les systèmes de connexion en boucle offrent principalement deux avantages qui sont: l'efficacité des protocoles d'accès et la compatibilité avec la technique du multiplex temporel. Ces systèmes présentent cependant deux inconvénients qui sont la fiabilité du système et sa disponibilité. Les systèmes de connexion du type multipoint pallient l'inconvénient de fiabilité et ont l'avantage de permettre aisément l'adjonction d'une station au système sans interrompre le fonctionnement des autres stations. Les systèmes de connexion du type multipoint présentent cependant l'inconvénient d'être très mal adapté à un fonctionnement en mode multiplex temporel comme on le montrera en détail en référence aux figures 2A et 2B.4

Le document US-A 3 732 374 décrit un système de communication fonctionnant en multiplex temporel dans lequel plusieurs stations sont reliées à une station de contrôle au moyen d'une liaison entrante et d'une liaison sortante conventionnelles. Les communications entre les stations et la station de contrôle se font au moyen de voies temporelles allouées alors que les communications entre les stations se font au moyen de voies temporelles non allouées et en bouclant la liaison entrante sur la liaison sortante. Un système de régulation du délai de propagation des voies permet de maintenir ce délai à une valeur constante. Ce système est complexe et ne permet pas l'utilisation de voies temporelles allouées pour les communications entre stations, rendant celles-ci plus complexes.

Les documents PATENTS ABSTRACTS OF JAPAN, Vol. 2, No. 70, 26 Mai 1978, page 2634 E 78 et JP-A 5 336 408 décrivent un système de communication dans lequel plusieurs stations sont reliées à une unité de contrôle au moyen de deux lignes de communication et une ligne de contrôle. Le système fonctionne en mode d'appel (en anglo saxon: polling), les appels étant transmis de station en station au moyen de la ligne de contrôle. Ce système permet un système de connexion simple mais ne peut fonctionner en multiplex temporel.

### Exposé de l'Invention

L'objet de l'invention est de fournir un système de connexion de stations du type multipoint qui soit très bien adapté à un fonctionnement du système en mode multiplex temporel.

D'une manière générale, l'invention propose un système pour connecter une station de contrôle (10) à une pluralité de stations (WS) qui fonctionnent en mode multiplex temporel, du type comprenant une liaison sortante (21) ayant ses deux extrémités reliées respectivement à la sortie de l'unité de contrôle (10) et à une première impédance de terminaison (Z1), et à laquelle est couplée l'entrée de chacune des stations (WS), et une liaison entrante (22) reliée à l'entrée de la station de contrôle (10) et à laquelle sont couplées la pluralité de station (WS), caractérisé en ce que:

les stations (WS) communiquent entre elles au moyen de voies temporelles qui leur sont affectées à l'intérieur de trames recurrentes, et la liaison entrante est arrangée en forme de U, dont une première branche (22-1) est reliée à l'entrée de la station de contrôle (10) et n'est couplée à aucune des stations (WS), et dont la seconde branche (22-2) est terminée par une seconde impédance de terminaison (Z2) et est couplée à ladite pluralité de stations (WS), la plus proche station (WS) de la station de contrôle (10) étant couplée à la seconde branche de façon à être la plus proche de ladite seconde impédance de terminaison, et la station la plus éloignée de la station de contrôle (10) étant couplée à l'autre extrémité de ladite seconde branche (22-2), la portion de la seconde branche comprise entre ladite station la plus éloignée et ladite station la plus proche ayant une longueur substantiellement égale à celle de la portion de la liaison sortante comprise entre ladite station la plus éloignée et ladite station la plus proche, et que les signaux sur ces deux portions de liaison se propagent dans le même sens.

### Brève Description des Figures

D'autres objets, caractéristiques et avantages de la présente invention ressortiront mieux de l'exposé qui suit, fait en référence aux dessins annexés à ce texte, qui représentent un mode de réalisation préféré de celle-ci.

La fig. 1 représente un système de connexion conforme à l'invention.

La fig. 2A représente schématiquement un système de connexion du type multipoint de l'art antérieur.

La fig. 2B est un diagramme des temps qui illustre le fonctionnement du système de la figure 2A en mode multiplex temporel.

La fig. 3A représente schématiquement le système de connexion de la figure 1.

La fig. 3B est un diagramme des temps qui illustre le fonctionnement du système de la figure 3A en mode multiplex temporel.

La fig. 4 illustre le format d'une trame sur la ligne sortante 21 de la figure 1.

La fig. 5 représente un mode de réalisation de l'adaptateur 15 de la figure 1.

La fig. 6 représente un mode de réalisation de l'adaptateur 20 de la figure 1.

## Description Détaillée de l'Invention

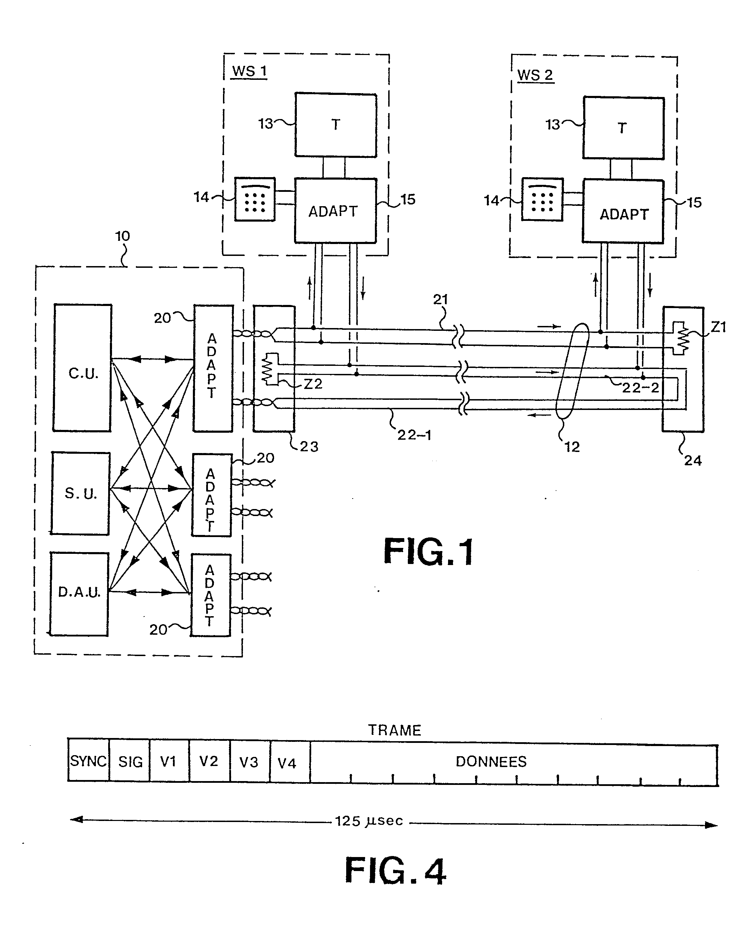

On a représenté schématiquement sur la figure 1 une système de connexion de stations de travail conforme à l'invention. Il comprend une station de contrôle 10 qui communique avec une pluralité de stations de travail illustrée par deux stations de travail WS1 et WS2, au moyen d'une liaison de communication commune 12. Chacune des stations de travail peut être composée d'un ou plusieurs dispositifs tels que terminal à écran, imprimante, poste téléphonique, etc. A titre d'exemple, chacune des stations WS1 et WS2 représentées sur la figure 1 comprend un terminal 13 et un poste téléphonique numérique 14, tous deux couplés à la liaison de communication commune 12 au moyen d'un adaptateur 15. La station de contrôle 10 comprend, à titre d'exemple, trois adaptateurs 20 servant chacun une liaison équipée de par exemple, quatre stations de travail, une unité de contrôle CU, une unité de commutation temporelle SU et une unité d'application de traitement de données DAU. La liaison de communication commune 12 est constituée par une ligne sortante 21 et une ligne entrante 22 qui peuvent être des paires torsadées comme illustré sur la figure et qui sont arrangées comme décrit ci-après. La ligne sortante 21 a une extrémité reliée à la sortie de la station de contrôle 10 et l'autre extrémité reliée à une impédance de terminaison Z1, et est reliée à l'entrée de chacune des stations de travail WS1 et WS2. La ligne entrante 22 a une forme en U dont une des branches, référencée 22-1 a son extrémité reliée à l'entrée de la station de contrôle 10, et dont l'autre des branches, référencée 22-2 a son extrémité reliée à une impédance de terminaison Z2. Les stations de travail WS1 et WS2 ont leur sortie reliée à la branche 22-2 de la ligne entrante 22. L'impédance de terminaison Z1 peut être comprise dans un boîtier de connexion 23 qui assure le couplage de la liaison commune 12 à la station de contrôle 10. L'impédance de terminaison Z2 et la base de la ligne entrante en forme de U22 peuvent être comprise dans un boîtier de terminaison 24 placé après la dernière station de travail connectée au système. La portion de la ligne sortante 21, qui est comprise entre la première et la dernière des stations de travail connectées au système doit avoir substantiellement la même longueur que la portion de la branche 22-2 qui est comprise entre ces deux stations de travail. Sur la figure 1, les signaux émis par la station de contrôle 10 se propagent de gauche à droite sur la ligne sortante 21 et sont absorbés par l'impédance de terminaison Z1; les signaux émis par les stations de travail se propagent de gauche à droite sur la branche 22-2 de droite à gauche, sur la branche 22-1, et sont appliqués à l'entrée de la station de contrôle 10.

Le système de l'invention présente un grand avantage lorsque la station de contrôle 10 et les stations de travail WS1 et WS2 fonctionnent en mode multiplex temporel, comme il apparaîtra de la description ci-après des figures 2A, 2B, 3A et 3B.

On a représenté schématiquement sur la figure 2A un système de connexion multipoint de l'art antérieur. Il comprend une station de contrôle 30 qui communique avec une pluralité de stations de travail, illustrée par deux stations de travail S1 et S2, au moyen d'une liaison commune constituée par une ligne sortante 31 et une ligne entrante 32. La ligne sortante 31 relie la sortie de la station de contrôle 30 à l'entrée de chacune des stations de travail S1 et S2, et est terminée par une impédance de terminaison Z3. La ligne entrante 32 relie la sortie de chacune des stations de travail S1 et S2 à l'entrée de la station de contrôle 30, et est terminée par une impédance de terminaison Z4. En fonctionnement en mode multiplex temporel, la station de contrôle 30 définit sur la ligne sortante 31 des trames récurrentes de durées égales, et dans chacune d'elle plusieurs voies temporelles sortantes qui sont affectées aux stations de travail. La station de contrôle 30 transmet un message à une station de travail donnée en le plaçant sur la ligne sortante 31 pendant la voie temporelle sortante affectée à cette station de travail. Si la longueur du message excède la capacité d'une voie temporelle sortante, la station de contrôle 30 transmet successivement des portions du message pendant la voie temporelle sortante affectée à cette station de travail pendant plusieurs trames successives. De même, une station de travail transmet un message à la station de contrôle 30 en plaçant un message ou une portion de ce message sur la ligne entrante 32 pendant la voie temporelle entrante qui lui est affectée. En général, on affecte à une station de travail une voie temporelle sortante et la voie temporelle entrante qui lui correspond; par exemple, on affectera à une station de travail donnée la $n^{ième}$ voie temporelle sortante sur la ligne sortante 31 et la $n^{ième}$ voie temporelle entrante sur la ligne entrante 32.

On a illustré sur la figure 2B la propagation de deux messages SM1 et SM2 à destination respectivement des stations de travail S1 et S2, placés par la station de contrôle 30 sur la ligne sortante 31 pendant deux voies temporelles sortantes successives d'une même trame. Le message SM1 transmis par la station de contrôle 30 à l'instant T1, parvient à la station de travail S1 à l'instant $T1+\theta1$, où $\theta1$ représente le temps de propagation du message entre la station de contrôle 30 et la station de travail S1, et à la station de travail S2 à l'instant $T1+\theta2$, où $\theta2$ représente le

temps de propagation du message entre la station de contrôle 30 et la station de travail S2. Le message SM2 transmis par la station de contrôle 30 à l'instant T2 parvient respectivement aux stations de travail S1 et S2 aux instants T2+$\theta$1 et T2+$\theta$2. Les messages de réponse RM1 et RM2 provenant des stations de travail S1 et S2 respectivement doivent parvenir à la station de contrôle 30 pendant deux voies temporelles entrantes successives, par exemple aux instants T3 et T4. On désignera par $\theta$0 la durée de l'intervalle de temps qui sépare la fin de l'émission du message SM1 par la station de contrôle 30 du début de la réception du message de réponse RM1 par celle-ci. Pour que le message de réponse RM1 parvienne à la station de contrôle 30 au temps T3, il faut que la station de travail S1 l'envoie un temps $\theta$0-2$\theta$1 après que celle-ci ait reçu le message SM1. Pour que le message de réponse RM2 parvienne à la station de contrôle 30 au temps T4, il faut que la station de travail S2 l'envoie un temps $\theta$0-2$\theta$2 après que celle-ci ait reçu le message SM2. Les temps $\theta$0-2$\theta$1 et $\theta$0-2$\theta$2 sont bien sûr différents, et il faut donc que chacune des stations de travail soit pourvue de moyens ajustables et précis pour déterminer leur instant d'émission en fonction de leur position géographique sur la liaison de communication commune. Ceci accroît le coût des stations de travail et nécessite la personnalisation de chacune d'elles lors de leur installation.

Dans un souci de clarté, on a représenté sur la figure 3A le schéma simplifié du système de l'invention de la figure 1, et sur la figure 3B un diagramme des temps qui en illustre le fonctionnement en mode multiplex temporel. On supposera que la station de contrôle 10 et les stations de travail WS1 et WS2 sont situées géographiquement aux mêmes emplacements que la station de contrôle 30 et les stations de travail S1 et S2, respectivement. La station de contrôle 10 transmet successivement les messages SM1 et SM2 à destination des stations de travail WS1 et WS2 sur la ligne sortante 21 aux instants T1 et T2, respectivement. Le message SM1 parvient à la station WS1 à l'instant T1+$\theta$1. Selon l'invention la station WS1 place son message de réponse RM1 sur la branche 22-2 de la ligne entrante 22 un temps de réponse fixe prédéterminé après avoir reçu son message SM1. Ce temps de réponse peut avoir pour origine le début, la fin ou tout autre instant du message SM1 et une durée quelconque choisie au préalable. Sur la figure 3B, à titre d'exemple, la station WS1 place son message de réponse RM1 à la fin de la réception du message SM1. Les messages SM1 et SM2 sur la ligne sortante 21 et le message RM1 sur la branche 22-2 se propagent simultanément et dans le même sens vers la station de travail WS2. A l'instant T2+$\theta$2 le message SM2 parvient à la station de travail WS2 qui place son message de réponse RM2 sur la branche 22-2 avec le même temps de réponse sur celui utilisé par la station de travail WS1. Les messages de réponse RM1 et RM2 se trouvent ainsi placés automatiquement dans des voies temporelles entrantes appropriées et se propagent jusqu'à l'entrée de la station de contrôle 10.

On voit ainsi clairement que le système de l'invention ne nécessite pas que les stations de travail soient pourvues de moyens ajustables pour déterminer leur instant d'émission, ni qu'elles soient personnalisées à leur installation.

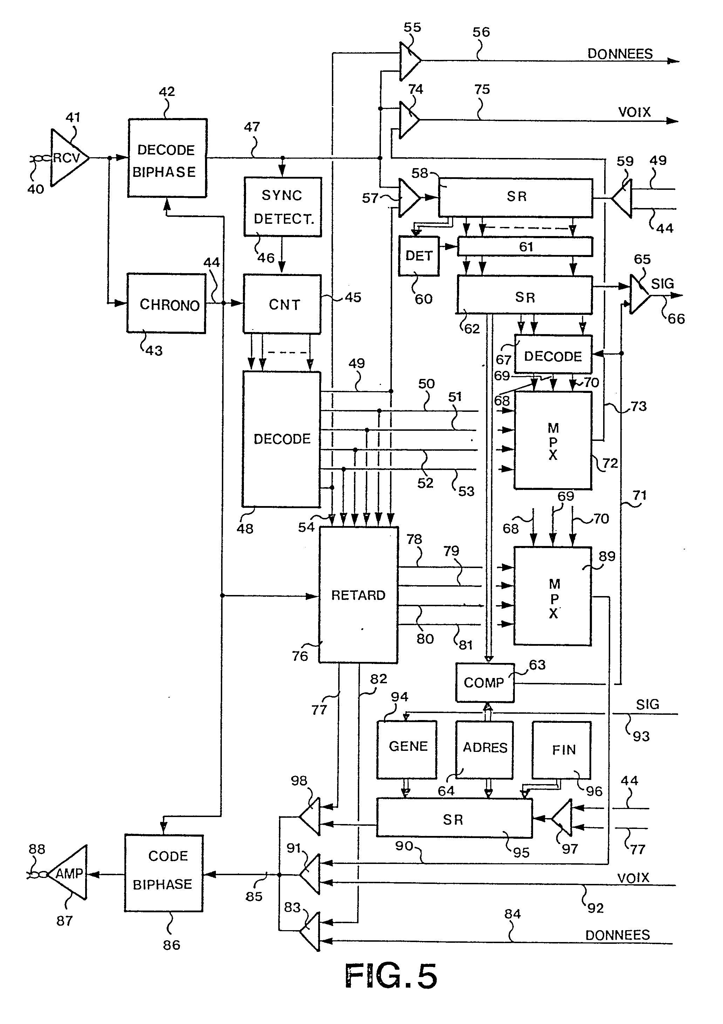

On décrira maintenant un exemple de réalisation des adaptateurs 15 et 21 utilisés dans un système de connexion conforme à l'invention dans lequel ces adaptateurs fonctionnent en mode multiplex temporel. La station de contrôle 10 transmet un train de bit continu qui est divisé en trames sortantes de seize octets de huit bits, chaque trame ayant une durée de 125 microsecondes et le débit binaire du train de bits étant de 1,024 Mbps. Chaque trame sortante qui a été illustrée sur la figure 4 a le format suivant:

Octet 0      configuration de synchronisation
Octet 1      voie de signalisation
Octets 2 à 5  quatre voies temporelles de voix
Octets 6 à 15 voie temporelle de données.

Le train de bit continu reçu par la station de contrôle 10 est divisé en trames entrantes de seize octets de huit bits, ayant un format similaire à celui des trames sortantes, et qui est le suivant:

Octet 0       inutilisé
Octet 1       voie de signalisation entrante
Octets 2 à 15  quatre voies temporelles de voix
Octets 6 à 15  voie temporelle de données.

La configuration de synchronisation peut être de façon connue constituée par une séquence de bits prédéterminée facilement reconnaissable par les stations de travail. La voie de signalisation permet à la station de contrôle d'échanger des messages de signalisation prédéfinis avec les stations de travail, et notamment d'établir une connexion téléphonique entre la station de contrôle et une station de travail et d'affecter les quatres voies temporelles de voix aux stations de travail sélectionnées. Un message de signalisation comprendra typiquement:

– un code de signal qui permet de spécifier la nature du message de signalisation, par exemple, état d'appel, état décroché, état raccroché, état libre, état occupé, affectation des voies temporelles de voix, interruption, etc.,
– l'adresse de la station de travail, et
– un code de fin de message.

Les voies temporelles de voix permettent de transporter un échantillon de voix numérisé.

La voie temporelle de données est commune à toutes les stations de travail. Plusieurs trames sont traitées logiquement comme un train de bits continu. L'échange des données est contrôlé par un protocole approprié par exemple celui connu sous la désignation HDLC-NRM.

Les trains de bit sur la ligne entrante 22 et sur la ligne sortante 21 sont codés, par exemple, selon le procédé de codage biphase avec une transition au milieu de chaque temps bit, qui est un procédé connu largement utilisé.

On a représenté sur la figure 5 un exemple de réalisation d'un adaptateur 15 de station de travail fonctionnant en multiplex temporel avec les trames décrites ci-dessus. Le signal sur la ligne sortante 21 (figure 1) est appliqué par une ligne 40 à un récepteur à haute impédance d'entrée 41 dont la sortie est appliquée à un décodeur biphase 42. La sortie du récepteur 41 est aussi appliquée à un dispositif de récupération de chronologie 43 qui en dérive de façon connue un signal de chronologie à la cadence bit qui est disponible sur la ligne 44. Ce signal de chronologie est appliqué au décodeur biphase 42 et à l'entrée de comptage d'un compteur 45 qui est remis à zéro par la sortie d'un détecteur de configuration de synchronisation 46 qui a son entrée reliée à une ligne 47 connectée à la sortie du décodeur biphase 42. Le compteur 45 est couplé à un circuit de décodage 48 qui a six sorties reliées respectivement à six lignes 49 à 54, sur lesquelles il produit respectivement un signal SIG qui a un niveau haut pendant la voie de signalisation, c'est-à-dire pendant que le compteur compte les huit premiers temps bits qui suivent sa remise à zéro, quatre signaux V1 à V4 qui sont respectivement au niveau haut pendant les quatre voies temporelles de voix, et un signal DONNEES qui a un niveau haut pendant la voie temporelle de données. Le signal DONNEES sur la ligne 54 et le signal sur la ligne 47 sont appliqués à une porte ET 55 dont la sortie est appliquée au terminal 13 (figure 1) par une ligne de sortie de données 56. Le signal SIG sur la ligne 49 et le signal sur la ligne 47 sont appliqués à une porte ET 57 dont la sortie est appliquée à l'entrée d'un registre à décalage 58 dont le nombre d'étages est égal au nombre de bits d'un message de signalisation et dont le décalage est commandé par la sortie d'une porte ET 59 qui reçoit comme entrées le signal SIG sur la ligne 49 et le signal de chronologie bit sur la ligne 44. Les n premiers étages du registre à décalage 58, où n est le nombre de bits du code de fin de message de signalisation, sont reliés à un circuit de détection 60 dont la sortie commande une porte de transfert 61 qui couple les étages du registre à décalage 58 qui, lorsqu'il contient un message de signalisation, correspondent au code de signal et à l'adresse, à un registre à décalage de message de signalisation 62. Les étages du registre à décalage 62 qui contiennent l'adresse du message de signalisation sont reliés à une entrée d'un comparateur 63 qui reçoit sur son autre entrée l'adresse de la station de travail qui lui est fournie par un générateur d'adresse 64. La sortie du registre à décalage 62 et celle du comparateur 63 sont appliquées à un porte ET 65 dont la sortie est appliquée au poste téléphonique numérique 14 (figure 1) par une ligne de sortie de signalisation 66. Les étages du registre à décalage 62 qui contiennent le code de signal du message de signalisation sont reliés à un circuit de décodage 67 qui a trois sorties reliées respectivement à des lignes 68 à 70 et une entrée d'inhibition reliée à la sortie du comparateur 63 par une ligne 71. Les lignes 50 à 53 et 68 à 70 sont appliquées à un multiplexeur 72 dont la sortie est appliquée par une ligne 73 à une entrée d'une porte ET 74 dont l'autre entrée est reliée à la ligne 47. La sortie de la porte ET 74 est appliquée au poste téléphonique 14 par une ligne de sortie de voix 75.

Les lignes 49 à 53 sont appliquées à un circuit à retard 76 qui est commandé par le signal de chronologie bit sur la ligne 44 et qui fournit respectivement sur six lignes 77 à 82 des signaux DEL SIG, DEL V1, DEL V2, DEL V3, DEL V4, DEL DONNEES qui sont des versions retardées des signaux SIG, V1 à V4 et DONNEES. Le signal DEL DONNEES sur la ligne 82 est appliqué à une porte ET 83 qui reçoit aussi la ligne de sortie de données 84 en provenance du terminal 15. La sortie de la porte ET 83 est reliée à une ligne 85 qui est appliquée à un codeur biphase 86 qui reçoit aussi le signal de chronologie bit sur la ligne 44. La sortie du codeur biphase 86 est appliquée à un amplificateur à haute impédance de sortie 87 dont la sortie est reliée à la ligne entrante 22 par une ligne 88. Les lignes 78 à 81 et 68 à 70 sont appliquées à un multiplexeur 89 dont la sortie est appliquée par une ligne 90 à une entrée d'une porte ET 91 dont l'autre entrée est reliée au poste téléphonique 14 par une ligne d'entrée de voix 92. Une ligne d'entrée de signalisation 93 est reliée à un générateur de code de signal 94 dont la sortie est reliée à un registre à décalage 95, qui reçoit aussi la sortie du générateur d'adresse 64, et celle d'un générateur de code de fin de message 96. Le décalage du registre à décalage 95 est commandée par la sortie d'une porte ET 97 qui reçoit comme entrées le signal DEL SIG sur la ligne 77 et le signal de chronologie bit sur la ligne 44. La sortie du registre à décalage 95 et la ligne 77 sont appliquées à une porte ET 98 dont la sortie est reliée à la ligne 85.

En fonctionnement, le signal sur la ligne sortante 21 est appliqué à travers le récepteur 41 au décodeur biphase 42 qui restitue sur la ligne 47 le train de bits transmis par la station de contrôle 10. Lorsque le détecteur 46 détecte une configuration de synchronisation dans le train de bits reçu sur la ligne 47, il remet à zéro le compteur 45 qui commence à compter les temps bits successifs définis par le signal de chronologie bit sur la ligne 44, et le circuit de décodage 48 active successivement les signaux SIG, V1 à V4 et DONNEES sur les lignes 49 à 54. Lorsque le signal SIG passe au niveau haut, il conditionne la porte ET 57 et l'octet contenu dans la voie de signalisation est chargé dans le registre à décalage 58. Ce processus de chargement du registre à décalage 58 se répète à chaque trame. Lorsque le détecteur 60 détecte un code fin de message dans les derniers étages du registre à décalage 58, il commande la porte 61 qui transfère le contenu du registre à décalage 58 dans le registre à décalage 62. L'adresse contenue dans le message de signalisation est comparée à celle de la station de travail générée par le générateur 64. Si les deux adresses ne concordent pas la sortie du comparateur 63 passe au ni-

veau bas, rend non conductrice la porte ET 65 et inhibe le circuit de décodage 67. Si les deux adresses concordent, la sortie du comparateur 63 passe au niveau haut conditionnant le circuit de décodage 67. Si le code de signal spécifie une opération autre qu'une affectation de voie temporelle, le circuit de décodage 67 inhibe le multiplexeur 72 par la ligne 70 et le message de signalisation est décalé sur la ligne de sortie de signalisation 66 à destination du poste téléphonique 14. Si le code de signal spécifie une opération d'affectation de voie temporelle, le circuit de décodage 67 sélectionne le multiplexeur 72 par la ligne 70, et lui fournit au moyen des lignes 68 et 69 l'identification de celles des quatres voies temporelles de voix de la trame qui est affectée à la station. Si, par exemple la deuxième voie temporelle de voix est affectée à la station de travail, le multiplexeur 72 relie la ligne 51 à la ligne 73 et lorsque le signal V2 sur la ligne 51 est haut, la ligne 47 est reliée à la ligne de sortie de voix 75 par la porte ET 74 et l'échantillon de voix transporté par cette voie temporelle est appliqué au poste téléphonique 14.

Pendant que le signal DONNEES sur la ligne 54 est haut, la porte ET 55 est rendue passante et le train de bits de données sur la ligne 47 est transféré au terminal 13 par la ligne de sortie de données 56.

Le temps de réponse auquel on a fait référence plus haut, est fourni par le circuit à retard 76. Dans un souci de simplicité, ce temps de réponse est défini en temps bits qui sont rythmés par le signal de chronologie bit sur la ligne 44. Le message de signalisation envoyé par la station de travail à la station de contrôle 10 est composé dans le registre à décalage 95. Le code de fin de message est fourni par le générateur 64 et l'adresse de la station de travail est fournie par le générateur d'adresse 64. Le code de signal est généré par le générateur 94 en réponse aux signaux de signalisation fournis par le poste téléphonique 14 ou au signal d'interruption fourni par le terminal 15. Le signal de signalisation ainsi composé dans le registre à décalage est envoyé à la station de contrôle octet par octet à chaque fois que le signal DEL SIG est haut, c'est-à-dire pendant la voie de signalisation des trames entrantes. Lorsque le poste téléphonique 14 est engagé dans une communication téléphonique, les échantillons de voix en provenance de ce poste sont envoyés sur la ligne 85 à travers la porte 91 qui est rendue conductrice par celui des signaux DEL V1 à DEL V4 sélectionné par le multiplexeur 89 en réponse au message de signalisation d'affectation de voie temporelle reçu par la station de travail. Les bits de données en provenance du terminal 15 sur la ligne 84 sont appliqués à la ligne 85 au moyen de la porte 83 qui est rendue passante pendant que le signal DEL DONNEES est haut. Le train de bits sur la ligne 85 est codé en biphase par le codeur 86 et appliqué à la branche 22-2 de la ligne entrante 22 (figure 1) à travers l'amplificateur 87 et la ligne 88.

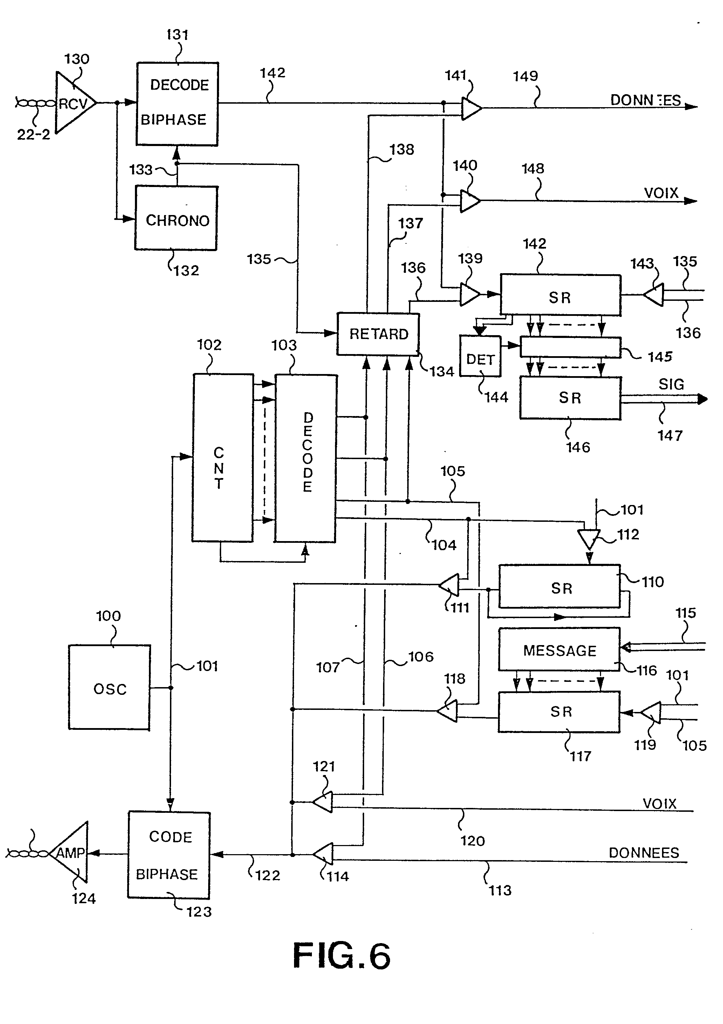

On a représenté sur la figure 6 un exemple de réalisation de l'adaptateur 20 de la station de contrôle 10. La réalisation de l'adaptateur 20 découle directement de celle de l'adaptateur 15 de station de travail illustré sur la figure 5. Une horloge 100 fournit un signal de chronologie bit à la cadence de 1,024 MHz qui est appliqué par une ligne 101 à un compteur 102 dont les étages et la sortie de report sont couplés à un circuit de décodage 103 similaire au circuit de décodage 48 de la figure 5. Le circuit de décodage 103 a quatre sorties reliées respectivement à quatre lignes 104 à 107 sur lesquelles il produit respectivement un signal SYNC-0 qui a un niveau haut pendant les huit premiers temps bits qui suivent le signal de report du compteur 102, c'est-à-dire pendant l'octet 0 de la trame sortante, un signal SIG-0 qui a un niveau haut pendant la voie de signalisation, un signal V-0 qui est au niveau haut pendant les quatre voies temporelles de voix, et un signal DONNEES-0 qui a un niveau haut pendant la voie temporelle de données. Un registre à décalage 110 dans lequel est emmagasinée la configuration de synchronisation a sa sortie rebouclée sur son entrée et appliquée à une porte ET 111 qui reçoit aussi le signal SYNC-0 sur la ligne 104. Le décalage du registre à décalage 110 est commandé par la sortie d'une porte ET 112 qui reçoit comme entrées le signal de chronologie bit sur la ligne 101 et le signal SYNC-0 sur la ligne 104. Une ligne d'entrée de données 113 en provenance de l'unité d'application de traitement de données DAU et la ligne 107 sont appliquées à une porte ET 114. Les signaux de signalisation provenant de l'unité de contrôle CU sont appliqués par un bus d'entrée de signalisation 115 à un dispositif de formation de message 116 qui décode les signaux de signalisation sur le bus 115 et génère le message de signalisation qui est ensuite transféré dans un registre à décalage 117. La sortie du registre à décalage 117 et la ligne 105 sont appliquées à une porte ET 118. Le décalage du registre à décalage 117 est commandé par la sortie d'une porte ET 119 qui reçoit comme entrées le signal de chronologie bit sur la ligne 101 et le signal SIG-0 sur la ligne 105. Une ligne de sortie de voix 120 en provenance de l'unité de commutation temporelle SU est appliquée à une porte ET 121 qui reçoit aussi comme entrée la ligne 106. Les sorties des portes ET 111, 114, 118 et 121 sont reliées entre elles et à une ligne 122 qui est connectée à l'entrée d'un codeur biphase 123 qui reçoit aussi le signal de chronologie bit sur la ligne 101. La sortie du codeur biphase 123 est appliquée à un amplificateur 124 dont la sortie est reliée à la ligne sortante 21 (figure 1). La branche 22-1 de la ligne entrante 22 est reliée à un récepteur à impédance d'entrée adaptée 130 dont la sortie est appliquée à un décodeur biphase 131 et à un dispositif de récupération de chronologie 132 qui dérive du signal reçu un signal de chronologie bit qui est appliqué par une ligne 133 au décodeur biphase 131. Les lignes 105 à 107 sont appliquées à un circuit à retard 134 qui produit des versions retardées DEL SIG-0, DEL V-0 et DEL DONNES 0 des signaux SIG-0 V-0 et DONNEES-0 produits par le circuit de décodage 103.

Le circuit à retard 134 introduit un retard égal à la somme du temps de réponse des stations de travail et du temps de propagation des signaux sur la ligne entrante 22. Ce retard est mis en phase avec le signal de chronologie bit produit par le dispositif de récupération de chronologie 132 que le circuit à retard 134 reçoit par une ligne 135. Les signaux DEL SIG-0, DEL V-0 et DEL DONNEES-0 sont appliqués respectivement par des lignes 136 à 138 à une entrée de trois portes ET 139 à 141. Ces portes ET ont leurs autres entrées reliées entre elles et à une ligne 142 qui est reliée à la sortie du décodeur biphase 131. La sortie de la porte ET 139 est appliquée à un registre à décalage de message de synchronisation 142 similaire au registre à décalage 58 de la figure 5. Le décalage du registre à décalage 142 est commandé par la sortie d'une porte ET 143 qui reçoit le signal DEL SIG-0 sur la ligne 136 et le signal de chronologie bit sur la ligne 135. Les n premiers étages du registre à décalage 142 sont reliés à un détecteur 144 dont la sortie commande une porte de transfert 145 qui couple les autres étages du registre à décalage 142 à un dispositif de décodage de message de signalisation 146 qui est le réciproque du dispositif de formation de message 116 et dont la sortie est appliquée par un bus de sortie de signalisation 147 à l'unité de contrôle CU. La sortie de la porte ET 140 sont est appliquée par une ligne d'entrée de voix 148 à l'unité de commutation temporelle SU. La sortie de la porte ET 141 est appliquée par une ligne d'entrée de données 149 à l'unité d'application de traitement de données DAU.

En fonctionnement, lorsque le compteur 102 produit un signal de report, le signal SYNC-0 passe au niveau haut et se maintient à ce niveau pendant la durée d'un octet, pendant laquelle la configuration de synchronisation emmagasinée dans le registre à décalage 110 est placée sur la ligne 122 à travers la porte ET 111. Lorsque le signal SYNC-0 passe au niveau bas le signal SIG-0 passe au niveau haut et se maintient à ce niveau pendant la durée d'un octet au cours de laquelle le premier octet du message de signalisation qui a été composé par le dispositif 116 et qui est emmagasiné dans le registre à décalage 117, est placé sur la ligne 122 à travers la porte ET 118.

Ensuite, les quatre échantillons de voix en provenance de l'unité de commutation temporelle SU 20 sont successivement placés sur la ligne 129 pendant que le signal V-0 est au niveau haut. Enfin, le signal DONNEES-0 passe au niveau haut et se maintient à ce niveau pendant la durée de dix octets et dix octets de données en provenance de l'unité d'application de traitement de données DAU sont placés sur la ligne 122 à travers la porte ET 114. Le train de bits sur la ligne 122 est converti en un signal biphase par le codeur biphase 123, et ce signal biphase est envoyé sur la ligne sortante 21 à travers l'amplificateur 124.

Le signal reçu de la branche 22-2 de la ligne entrante 22 est appliqué au récepteur 130 puis au décodeur biphase 131 qui le converti en un train de bits sur la ligne 142. Lorsque le signal DEL SIG-0 passe au niveau haut, et pendant qu'il se maintient au niveau haut, l'octet sur la ligne 142, qui est le contenu de la voie de signalisation, est chargé dans le registre à décalage 142. Ce processus de chargement du registre à décalage 142 se répète à chaque trame. Lorsque le détecteur 144 détecte un code de fin de message, le contenu du registre à décalage 142, sans le code de fin de message, est chargé dans le dispositif 146 à travers la porte 145. Le dispositif 146 décode le contenu du message de signalisation et fournit les signaux de signalisation appropriés à l'unité de contrôle CU. Lorsque le signal DEL V-0 passe au niveau haut, les échantillons de voix contenus dans les quatre voies temporelles de voix sont fournis à l'unité de commutation temporelle SU à travers la porte ET 140. Lorsque le signal DEL DONNEES-0 passe au niveau haut le contenu de la voie temporelle de données est appliqué à l'unité d'application de traitement de données DAU à travers la porte 141 et la ligne 149.

**Revendications**

1. Système pour connecter une station de contrôle (10) à une pluralité de stations (WS) qui fonctionnent en mode multiplex temporel, du type comprenant une liaison sortante (21) ayant ses deux entrémités reliées respectivement à la sortie de l'unité de contrôle (10) et à une première impédance de terminaison (Z1), et à laquelle est couplée l'entrée de chacune des stations (WS), et une liaison entrante (22) reliée à l'entrée de la station de contrôle (10) et à laquelle sont couplées la pluralité de station (WS), caractérisé en ce que:

les stations (WS) communiquent entre elles au moyen de voies temporelles qui leur sont affectées à l'intérieur de trames recurrentes, et

la liaison entrante est arrangée en forme de U, dont une première branche (22-1) est reliée à l'entrée de la station de contrôle (10) et n'est couplée à aucune des stations (WS), et dont la seconde branche (22-2) est terminée par une seconde impédance de terminaison (Z2) et est couplée à ladite pluralité de stations (WS), la plus proche station (WS) de la station de contrôle (10) étant couplée à la seconde branche de façon à être la plus proche de ladite seconde impédance de terminaison, et la station la plus éloignée de la station de contrôle (10) étant couplée à l'autre extrémité de ladite seconde branche (22-2), la portion de la seconde branche comprise entre ladite station la plus éloignée et ladite station la plus proche ayant une longueur substantiellement égale à celle de la portion de la liaison sortante comprise entre ladite station la plus éloignée et ladite station la plus proche, et que les signaux sur ces deux portions de liaison se propagent dans le même sens.

2. Système selon la revendication 1, caractérisé en ce que chacune des stations (WS) à laquelle est affectée une voie temporelle sur la liaison sortante a accès à une voie temporelle de la liaison entrante après un temps de réponse prédéterminé commun à toutes les stations (WS).

## Patentansprüche

1. System zum Verbinden einer Steuerstation (10) mit einer Vielzahl von Stationen (WS), die in Zeitmultiplexbetriebsart arbeiten und vom Typ mit einer Ausgangsverbindung (21) sind, deren beide Enden jeweils mit dem Ausgang der Steuerstation (10) sowie mit einer ersten Abschlussimpedanz (Z1) verbunden sind, und an der der Eingang aller Stationen (WS) angeschlossen ist, und eine Einlaufverbindung (22), die mit dem Eingang der Steuerstation (10) verbunden ist und an die die Vielzahl der Stationen (WS) gekoppelt ist, dadurch gekennzeichnet, dass:

die Stationen (WS) untereinander mit Hilfe von temporären Pfaden verkehren, die ihnen im Rahmen von rekursiven Rastern zugeteilt werden, und

dass die Einlaufverbindung in U-Form ausgelegt ist, deren erster Schenkel (22-1) mit dem Eingang der Steuerstation (10) verbunden ist, aber sonst an keiner der Stationen (WS) angeschlossen ist, und deren zweiter Schenkel (22-2) in einer zweiten Abschlussimpedanz (Z2) endet und mit der genannten Vielzahl von Stationen (WS) zusammengekoppelt ist, wobei die der Steuerstation (10) am nächsten liegende Station (WS) derart mit dem zweiten Schenkel verbunden ist, dass sie der genannten zweiten Abschlussimpedanz am nächsten liegt und die von der Steuerstation (10) am weitesten entfernte Station (WS) mit dem anderen Ende des genannten zweiten Schenkels zusammengekoppelt ist; die Strecke auf dem zweiten Schenkel zwischen der genannten, am weitesten entfernten Station und der genannten, am nächsten liegenden Station eine Länge aufweist, die praktisch der Strecke der ausgehenden Verbindung zwischen der genannten, am weitesten entfernt liegenden Station und der genannten, am nächsten liegenden Station entspricht, und die Signale zwischen den beiden Verbindungsstrecken sich in gleicher Richtung ausbreiten.

2. System nach Anspruch 1, dadurch gekennzeichnet, dass jede der Stationen (WS), der auf der Ausgangsleitung ein temporärer Pfad zugeteilt wurde, nach einer vorgegebenen und für alle Stationen (WS) gleichen Ansprechzeit ebenfalls über Zugang zu einem temporären Pfad der einlaufenden Verbindung verfügt.

## Claims

1. A system for connecting a control station (10) to a plurality of stations (WS) operating in the time-division multiplex mode, of the type including an output link (21) the ends of which are respectively connected to the output of said control station (10) and to a first terminating impedance (Z1), and to which the input of each of said stations (WS) is coupled, and an input link (22) connected to the input of said control station (10) and to which said plurality of stations (WS) are coupled, characterized in that:

said stations (WS) communicate with one another over time-division channels allocated thereto within recurrent frames, and

said input link is configured as a U a first leg (22-1) of which is connected to the input of the control station (10) and is not connected to any of said stations (WS), and the second leg (22-2) of which has its end connected to a second terminating impedance (Z2) and is connected to said plurality of stations (WS), the station (WS) that is nearest said control station (10) being connected to said second leg so as to be nearest said second terminating impedance, and the station that is farthest from said control station (10) being connected to the other end of said second leg (22-2), the portion of said second leg that lies between said farthest and said nearest stations being substantially the same length as the portion of said output link that lies between said farthest and said nearest stations, and in that signals travel in the same direction on both of these portions of said link.

2. A system according to claim 1, characterized in that each of said stations (WS) to which a time-division channel on said output link is allocated can access a time-division channel on said input link after a predetermined response time common to all of said stations (WS) has elapsed.

**FIG.1**

| SYNC | SIG | V1 | V2 | V3 | V4 | DONNEES |
|------|-----|----|----|----|----|---------|

TRAME

◄——————————— 125 μsec ———————————►

**FIG.4**

0 112 952

# FIG.2A

S 2

S 1

30

Z3

Z 4

31

CONTROLE

32

$\theta_0$

niveau 30 | SM1 | SM2 | | RM1 | RM2

niveau S1 | SM1 | SM2 | | RM1 | RM2

niveau S2 | SM1 | SM2 | | RM1 | RM2

# FIG.2B

T1

T1+$\theta$1

T1+$\theta$2

T2

T3

T4

temps

# FIG.3A

WS2

WS1

10

Z1

21

CONTROLE

22-2

Z2

22-1

niveau WS 1 | SM1 | SM2 — Sur 21

RM1 — Sur 22-2

niveau WS 2 | SM1 | SM2 — Sur 21

RM1 | RM2 — Sur 22-2

# FIG.3B

$T_1+\theta_1$

$T_2+\theta_2$

2

11

FIG.5

FIG.6